Europäisches Patentamt

European Patent Office

Office européen des brevets

(11) Numéro de publication: **0 122 858**
**A1**

## (12) DEMANDE DE BREVET EUROPEEN

(21) Numéro de dépôt: **84400734.4**

(22) Date de dépôt: **12.04.84**

(51) Int. Cl.³: **F 26 B 3/20**
F 26 B 25/04, B 01 D 1/22
B 01 J 2/24

(30) Priorité: **14.04.83 FR 8306109**

(43) Date de publication de la demande:
**24.10.84 Bulletin 84/43**

(84) Etats contractants désignés:
**BE CH DE FR GB IT LI NL SE**

(71) Demandeur: **ELECTRICITE DE FRANCE Service National
2, rue Louis Murat
F-75008 Paris(FR)**

(72) Inventeur: **Massot, Jean-Claude
147, Rue du Temple
F-75003 Paris(FR)**

(74) Mandataire: **CABINET BONNET-THIRION
95 Boulevard Beaumarchais
F-75003 Paris(FR)**

(54) Sécheur de produits liquides ou pâteux et installation comportant un tel sécheur.

(57) L'invention concerne un sécheur de produits liquides ou pâteux, comportant une enveloppe (30), un cylindre intérieur (31) et un espace entre enveloppe et cylindre pour constituer une gaine de chauffage, ainsi qu'une installation comportant un tel sécheur.

Le sécheur est caractérisé en ce que le cylindre intérieur (31) est actionnable en rotation par rapport à l'enveloppe (30), et en ce qu'il comporte des moyens d'introduction des produits à sécher et d'épandage (35) de ces produits sur la paroi interne dudit cylindre pour encoller celle-ci, des moyens de séparation (38) des produits secs de ladite paroi interne, des moyens d'évacuation (37) des produits secs, et une sortie pour les buées produites par le séchage des produits.

L'invention peut servir au séchage en continu de produits thermosensibles dans un système à économisation d'énergie par recompression de vapeur.

FIG.2

## Sécheur de produits liquides ou pâteux et installation comportant un tel sécheur.

L'invention concerne un sécheur de produits liquides ou pâteux, du genre comportant une enveloppe extérieure, un cylindre intérieur à cette enveloppe, et un espace entre l'enveloppe et le cylindre pour constituer une gaine de chauffage. Elle concerne également une installation comportant un tel sécheur.

On connaît déjà de nombreux types de sécheurs de produits liquides ou pâteux, notamment des sécheurs opérant par conduction (sécheurs à cylindre, et sécheurs à palettes), ou par convection (tours d'atomisation).

Dans les sécheurs à cylindre, les produits à sécher sont étalés sur la surface extérieure d'un cylindre creux chauffé intérieurement par de la vapeur et tournant autour d'un axe horizontal. La température doit être réglée par la pression de vapeur dans le cylindre et le temps de séjour dépend de la vitesse de rotation du cylindre. Le produit doit être distribué en couche fine et uniforme sur la surface du cylindre et le séchage s'effectue progressivement au cours de sa rotation. Le produit séché est finalement évacué au moyen d'un couteau râcleur qui appuie sur le cylindre suivant une génératrice.

Il existe différentes variantes de ce type de sécheur, évolutions du sécheur "Hatmaker" développé au début du siècle, comportant deux cylindres disposés parallèlement à faible distance l'un de l'autre, avec une alimentation dans un bourbier situé entre ces cylindres ; ce type d'alimentation présente l'avantage de concentrer le produit avant séchage, mais implique une masse importante de produit exposée relativement longuement à de hautes températures, ce qui réserve ce matériel au traitement des produits non thermosensibles ou dont la qualité est de peu d'importance (eaux résiduaires par exemple).

En vue d'adapter ce type de sécheur aux produits thermosensibles de concentration moyenne et de faible viscosité, notamment au lait, on a prévu ensuite d'introduire le produit à la surface des cylindres au moyen de rampes de pulvérisation.

Dans une autre variante non adaptable aux produits thermosensibles, il existe un seul cylindre à la surface duquel la répartition du produit est réalisée par trempage dans le liquide à sécher.

Dans des variantes adaptables aux produits thermosensibles, le mouillage du cylindre sécheur est réalisé au moyen d'un ou plusieurs satellites. Des formes de réalisation différentes sont prévues pour les produits liquides à haute concentration ; ainsi, pour les liquides à l'état huileux (lait concentré, suspensions de P.V.C., amidon hydrolysé), le mouillage du cylindre sécheur est réalisé au moyen de cylindres auxiliaires disposés en série en amont du cylindre principal, le premier d'entre eux trempant dans le liquide à sécher ; pour les produits pâteux mais encore pompables (fromages fondus, oxydes métalliques, suspensions colloïdales), les produits peuvent être introduits dans l'interstice entre deux cylindres auxiliaires en série en amont du cylindre principal ; pour les produits amylacés également encore pompables, amidon, farines de céréales, purées de légumes, les cylindres auxiliaires ont été répartis en amont sur une partie de la périphérie du cylindre principal, en quelque sorte en parallèle, de manière à réaliser l'application de plusieurs couches minces successives, ce qui permet d'améliorer la gélatinisation et d'optimiser en conséquence le rendement du matériel ; pour les produits pâteux non pompables (purée de pommes de terre), la même disposition que la précédente a été adoptée, mais avec une alimentation par bourbier suspendu réalisée uniquement en amont du premier cylindre auxiliaire.

Ces sécheurs sont généralement des appareils massifs et surdimensionnés pour répondre à la législation sur les appareils à pression.

Pour remédier à cet inconvénient, on a également prévu des sécheurs du dernier type mentionné, avec un cylindre à double paroi, la paroi extérieure, mince et tournante, étant destinée à recevoir sur son pourtour les produits issus d'un unique bourbier suspendu, disposés en une couche mince régularisée par des cylindres auxiliaires, tandis que la paroi intérieure est maintenue fixe, un fluide thermique de chauffage à l'état liquide étant mis en circulation en sens inverse entre les deux parois, à une pression voisine de la pression atmosphérique.

Il n'empêche que la plupart de ces sécheurs sont en fait mal adaptés aux produits très thermosensibles, et que, de plus, la chaleur latente des buées est très difficilement récupérable dans de bonnes conditions.

Dans les sécheurs à palettes, un corps cylindrique horizontal chauffé par une double enveloppe est muni intérieurement d'un arbre tournant muni de bras à l'extrémité desquels sont fixées des palettes ; l'arbre et les bras peuvent être eux-mêmes chauffés. Le produit à sécher est constamment mélangé grâce à l'orientation des palettes, et les palettes peuvent dans certains cas jouer le rôle de couteaux râcleurs et de mélangeurs ; cependant, ces sécheurs sont incompatibles avec les produits qui collent ou forment des boules en séchant ; de plus, ils ne peuvent travailler en régime continu; ils sont utilisés principalement dans les industries pharmaceutiques et chimiques (plastiques, poudres métalliques), et assez peu dans le domaine agro-alimentaire.

Les tours d'atomisation ont été conçues pour remédier aux inconvénients de sécheurs opérant par conduction, et notamment pour augmenter les débits des produits à traiter et diminuer la dégradation que les traitements antérieurs faisaient subir aux produits thermosensibles, notamment aux produits alimentaires contenant des protéines. Dans ces tours, le produit à traiter est atomisé dans une enceinte où de l'air chaud est lui-même mis en circulation. Cependant, la coïncidence entre trajectoires du liquide et de l'air chaud est aléatoire, c'est-à-dire qu'une goutte de produit peut, soit être constamment en contact avec l'air chaud et être surchauffée, soit ne rencontrer que de l'air humide ayant déjà fourni sa chaleur ; de ce fait, le séchage du produit n'est pas uniforme ; de plus, il est parfois nécessaire de diluer les produits avant de les admettre dans l'enceinte (par une buse de distribution). Ces tours sont très consommatrices d'énergie (2 kilogrammes de vapeur par kilogramme d'eau enlevé), encombrantes, et d'une installation onéreuse.

4     0122858

L'invention a pour but de remédier à ces inconvénients, et de créer un sécheur qui convienne aussi bien pour les produits liquides et pâteux, compatible avec des systèmes d'économisation de l'énergie (par exemple par recompression mécanique de vapeur), permettant de conserver une bonne qualité de traitement pour les produits thermosensibles, et fonctionnant en continu.

A cet effet, l'invention concerne un sécheur de produits liquides ou pâteux, du genre comportant une enveloppe extérieure, un cylindre intérieur à cette enveloppe, et un espace entre l'enveloppe et le cylindre pour constituer une gaine de chauffage, sécheur caractérisé en ce que le cylindre intérieur est monté actionnable en rotation par rapport à l'enveloppe autour d'un axe longitudinal, et en ce qu'il comporte des moyens d'introduction dans le cylindre des produits à sécher et d'épandage de ces produits sur la paroi interne dudit cylindre pour en encoller celle-ci, des moyens de séparation des produits secs de ladite paroi interne, des moyens d'évacuation des produits secs de l'intérieur du cylindre, et une sortie pour les buées produites par le séchage des produits.

L'invention concerne également une installation de séchage, caractérisée en ce qu'elle comporte un sécheur du type ci-dessus et un circuit de récupération ainsi que de compression des buées issues du séchage des produits à dessécher, en vue de les introduire dans la gaine de chauffage.

Les caractéristiques et avantages de l'invention ressortiront d'ailleurs des dessins ci-joints représentant des formes de réalisation préférentielles de l'invention, dans lesquels :

la figure 1 est une coupe longitudinale schématique d'une première forme de réalisation d'un sécheur selon l'invention ;

la figure 2 est une coupe transversale schématique du sécheur de la figure 1 ;

la figure 3 est une coupe longitudinale schématique d'une deuxième forme de réalisation d'un sécheur selon l'invention ;

la figure 4 est une coupe transversale schématique du sécheur de la figure 3 ;

la figure 5 est une vue schématique partiellement coupée longitudinalement, d'une installation constituée d'un sécheur selon l'invention et de ses principaux appareils annexes, dans le cas d'un système à recompression de vapeur.

Le sécheur représenté sur les figures comporte, sur un socle 1, sur lequel il est maintenu par des supports 2, un corps 3 constitué d'une enveloppe extérieure fixe 30 contenant un cylindre tournant 31 avec interposition d'une gaine de chauffage 32. L'enveloppe 30 comme le cylindre tournant 31 ont une forme générale cylindrique de révolution à section circulaire et sont disposés coaxialement ; leur axe longitudinal, disposé horizontalement, est donc ici confondu, et cet axe longitudinal commun est l'axe central de la rotation du cylindre 31.

A cette fin, l'enveloppe 30 comporte des faces d'extrémité 301 munies en leur centre de paliers supports 302 pour le cylindre tournant 31. Ces paliers 302 sont destinés à recevoir un arbre creux prévu sur le cylindre 31 et disposé selon l'axe longitudinal de celui-ci. Cet arbre creux est réalisé en deux parties communiquant chacune avec l'intérieur du cylindre 31, au centre d'une face d'extrémité 311 respective dudit cylindre ; les deux parties 312 constituant l'arbre creux du cylindre sont portées par les paliers 302 par l'intermédiaire de roulements 33, et l'étanchéité est assurée par des garnitures 34.

Le fait que l'arbre en deux parties 312 est creux, permet l'introduction dans le cylindre de produits à sécher, et l'évacuation des produits secs et des buées parallèlement à l'axe de rotation du cylindre, comme il sera vu plus en détail par la suite.

L'espace entre l'enveloppe 30 et le cylindre 31 est destiné à constituer une gaine de circulation 32 pour un fluide de chauffage (vapeur, fluide thermique) du cylindre 31 et de son contenu, plus particulièrement des produits à sécher. Aussi, cet espace comporte à sa partie supérieure, par exemple dans une face d'extrémité de l'enveloppe 30, une entrée 303 de vapeur ou de fluide thermique chaud, et, à sa partie inférieure, de préférence dans la paroi latérale de l'enveloppe 30, approximativement à l'opposé de l'entrée de vapeur 303, une sortie 304 pour les condensats et/ou les vapeurs non condensées, le fluide thermique refroidi, etc..

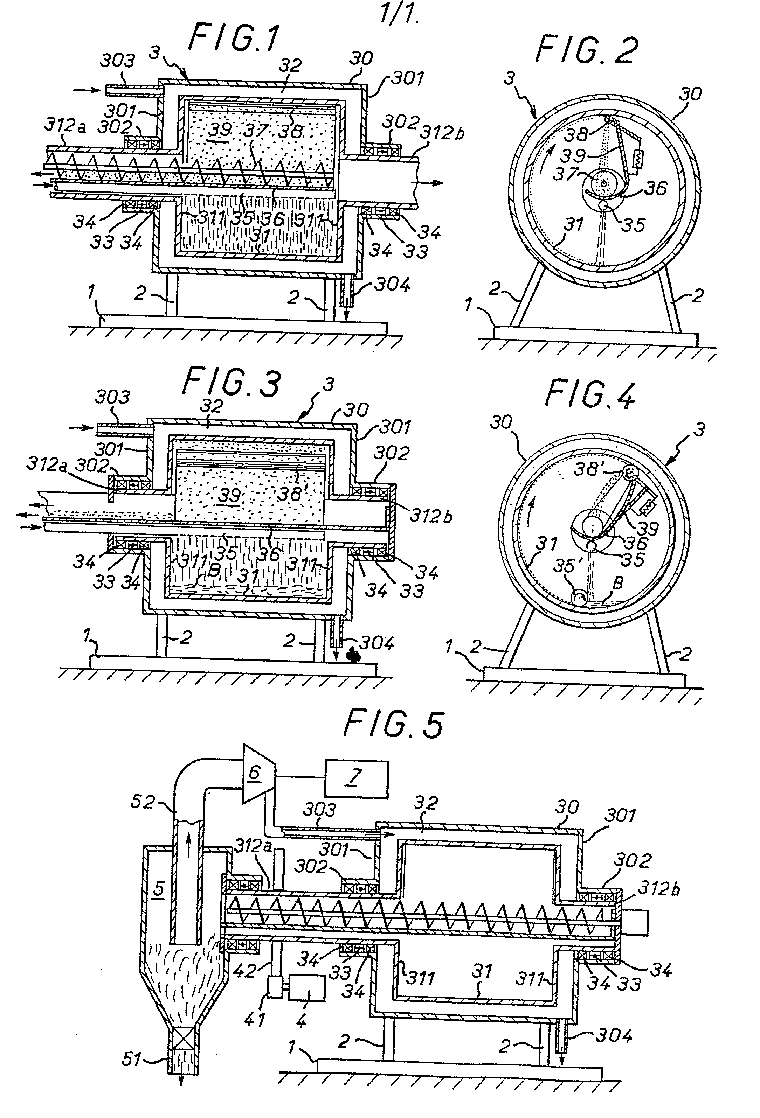

Dans la forme de réalisation représentée sur les figures 1 et 2, le fluide de chauffage parcourant la gaine de circulation est constitué par de la vapeur d'eau, laquelle peut être partiellement condensée lors de son parcours. Dans cette forme de réalisation, les produits à sécher et les produits secs transitent par un même côté du cylindre dans l'un des demi-arbres creux 312a (respectivement pour entrer dans le cylindre et en sortir), tandis que les buées sont évacuées du côté opposé dans l'autre demi-arbre creux 312b. A cette fin, par le premier demi-arbre creux, pénètrent dans le cylindre 31, une canalisation d'alimentation 35 pour y introduire les produits à sécher, une gouttière 36 de réception des produits secs fixée par exemple à ses extrémités à deux flasques respectifs solidaires de l'enveloppe 30 (fixation non représentée afin de ne pas surcharger les dessins), sous laquelle est fixée la canalisation d'alimentation 35, et une vis sans fin 37 d'extraction des produits secs contenus dans la gouttière, s'étendant parallèlement à l'axe du cylindre, la vis d'extraction 37 fonctionnant en vis d'Archimède ; par le deuxième demi-arbre creux, les buées sont évacuées par des moyens appropriés, par exemple des moyens d'aspiration en soi connus. La canalisation d'alimentation 35, sous pression, traverse le cylindre 31 pratiquement de part en part, et elle est par exemple percée sur sa longueur d'orifices de pulvérisation et d'épandage des produits à sécher sur la paroi interne du cylindre pour en encoller celle-ci. En vue de séparer les produits secs de cette paroi interne, une lame longitudinale 38 s'étend dans le cylindre 31 pratiquement sur toute la longueur de celui-ci ; cette lame est orientée de telle sorte que son fil soit disposé selon une génératrice du cylindre, à très faible distance de la paroi interne de celui-ci, par exemple à la verticale au-dessus de l'axe longitudinal du cylindre, le plan de la lame 38 étant incliné d'un angle approprié de l'ordre de 45 degrés à 90 degrés selon les utilisations, par rapport au rayon du cylindre passant par son fil ; la lame est portée par un support articulé relié à la gouttière 36 par un déflecteur 39 sur lequel est articulé le dit support, déflecteur empêchant les projections des produits desséchés séparés de la paroi interne du cylindre, en dehors de la gouttière. Un ressort ou un vérin relié d'un côté au déflecteur et à l'opposé au support, maintient la lame en contact avec la paroi interne du cylindre ; la mise en oeuvre d'un vérin permet un réglage facile de l'effort d'application.

Le sécheur fonctionne donc en continu, le cylindre intérieur 31 étant actionné en rotation dans le sens des aiguilles d'une montre à l'intérieur de l'enveloppe 30, et chauffé par la circulation de fluide entrant ici à l'état de vapeur d'eau par l'entrée 303 et évacué à l'état liquide par la sortie 304. Les produits à dessécher sont introduits dans le cylindre par la canalisation d'alimentation 35 et ici pulvérisés par les orifices de cette canalisation, pour être épandus sur la paroi interne du cylindre, ce qui réalise un encollage de cette paroi par les produits à dessécher ; lorsque les produits à dessécher ont été épandus par gravité sur la paroi, à la partie inférieure du cylindre, le mouvement de celui-ci et l'opération de séchage entraînent que ce sont des produits secs qui atteignent la partie supérieure du cylindre ; ces produits secs sont séparés de la paroi par la lame 38, et tombent par gravité dans la gouttière 36 sans se disperser dans le cylindre grâce à la présence du déflecteur 39 qui guide, en quelque sorte, jusqu'à la gouttière, les particules de produit qui auraient tendance à s'écarter de la trajectoire normale. La vis d'extraction 37, actionnée elle-même en rotation dans la gouttière 36, fait progresser les produits secs détachés de la paroi pour les évacuer de l'intérieur du cylindre, en direction de l'extérieur, par la région formant le premier demi-arbre creux, tandis que les buées produites par le séchage des produits sont elles-mêmes évacuées du cylindre par leur sortie prévue dans le demi-arbre creux opposé.

Dans la forme de réalisation représentée sur les figures 3 et 4, le fluide de chauffage est un fluide thermique entrant à l'état gazeux ou liquide, chaud, et pouvant être

8    0122858

évacué éventuellement au même état, mais à une température inférieure. Dans cette forme de réalisation, non seulement les produits à sécher et les produits secs transitent par un même côté du cylindre dans l'un des demi-arbres creux 312a, mais les buées sont évacuées également par le même demi-arbre creux. Par ce premier demi-arbre creux 312a pénètrent dans le cylindre comme dans la forme de réalisation précédemment décrite, une canalisation d'alimentation 35 sous pression et perforée pour permettre la pulvérisation, une gouttière 36 fixée à des flasques et sous laquelle est elle-même fixée la canalisation 35, et des moyens d'extraction des produits secs tels qu'une vis sans fin (non représentés, pour ne pas surcharger les dessins), mais également des moyens d'extraction des buées. Etant placés dans l'hypothèse de produits à dessécher de consistance différente que précédemment, ceux-ci forment à la partie inférieure du cylindre 31 un bourbier B sur lequel il est nécessaire d'intervenir afin de provoquer une répartition du produit relativement régulière en épaisseur sur la paroi interne du cylindre. A cette fin, la partie inférieure du sécheur est munie d'un rouleau applicateur 35' améliorant l'épandage des produits et l'encollage de la paroi; ce rouleau applicateur 35' est disposé longitudinalement dans le cylindre de telle sorte que sa périphérie soit à la distance désirée de la paroi interne de celui-ci, sur le trajet des produits à dessécher entre la zone inférieure du cylindre où ils chutent et la partie supérieure où, secs, ils sont décollés, compte tenu du sens de rotation dudit cylindre, de préférence à proximité immédiate de la génératrice la plus basse de ce cylindre, mais malgré tout suffisamment éloigné de la partie inférieure du cylindre pour que la quasi-totalité des produits à dessécher tombe sur une région de la paroi du cylindre où l'épaisseur de produits n'a pas encore été régularisée par ledit rouleau. En vue de séparer les produits secs de cette paroi interne, il est prévu une brosse cylindrique 38' dont l'axe longitudinal s'étend dans le cylindre 31 pratiquement sur toute la longueur de celui-ci parallèlement à l'axe longitudinal de rotation du cylindre 31 ; cette brosse 38' est disposée de telle sorte que, lors de la rotation du cylindre, sa périphérie puisse venir au contact de la paroi interne dudit cylindre. L'axe longitudinal de la brosse n'est pas dans le plan diamétral du cylindre qui est disposé verticalement, mais dans un plan diamétral incliné, de telle sorte que les produits à dessécher parcourent légèrement plus d'un demi-tour sur la paroi du cylindre entre le moment de leur chute par gravité sur cette paroi et celui de leur séparation de cette paroi par la brosse 38'. La brosse 38', comme la lame des figures 1 et 2, est portée par un support articulé relié à la gouttière 36 par un déflecteur 39 empêchant la projection des produits desséchés en dehors de cette gouttière 36, et un ressort ou un vérin maintient également cette brosse en contact avec la paroi interne du cylindre. Deux poulies calées respectivement sur l'axe de la brosse et sur celui de la vis d'extraction, reliées par une courroie, permettent de transmettre à la brosse un mouvement de rotation provoquant le décollage du produit sec.

Le sécheur fonctionne donc approximativement de la même manière que celui selon la première forme de réalisation. Cependant, comme il a été vu, le fluide de chauffage peut sortir sous le même état que celui qu'il présentait à l'entrée, mais à une température inférieure. Les produits à dessécher tombent par gravité au fond du cylindre 31 où ils forment le bourbier, et l'encollage est réalisé au début de leur trajectoire ascendante, par le rouleau applicateur 35'. Lorsque les produits, devenus secs, atteignent la brosse 38', ils sont décollés de la paroi du cylindre par celle-ci, tombent par gravité dans la gouttière 36, et sont évacués par le premier demi-arbre creux. Les buées issues du séchage sont également évacuées par ce demi-arbre creux.

Dans la forme de réalisation de la figure 5, comme dans celle des figures 1 et 2, le fluide de chauffage entre dans la gaine à l'état de vapeur et en sort à l'état liquide ; en revanche, comme dans la forme de réalisation des figures 3 et 4, les buées issues du séchage sont évacuées par le premier demi-arbre 312a, qui sert également à l'évacuation des produits secs ; les produits à dessécher sont introduits soit du même côté, soit du côté opposé par le second demi-arbre (les moyens d'introduction et d'épandage n'étant pas représentés ici). La séparation des produits secs de la paroi interne du cylindre 31 est effectuée par un moyen physique également non représenté (tel que l'un de ceux des première et deuxième formes de réalisation), comme la quasi-totalité de l'équipement intérieur du sécheur, qui a déjà fait l'objet d'une description. Le cylindre 31 du sécheur 3 est entraîné en rotation par un moteur 4 (de préférence un moto-variateur), par l'intermédiaire de poulies 41, 42, la poulie 42 étant par exemple calée autour du demi-arbre creux 312a servant à l'entrée des produits à dessécher et à la sortie des produits secs et des buées ; à son extrémité située à l'opposé du cylindre 31, ce même demi-arbre creux 312a débouche dans un cyclone 5 de séparation des produits secs et des buées ; les produits secs sont extraits à la base du cyclone, d'où ils sont évacués par une conduite 51 d'évacuation des produits secs tandis que les buées sont extraites à la partie supérieure du cyclone, par une conduite 52 d'extraction des buées aboutissant à l'entrée d'un compresseur 6 entraîné par un moteur 7 ; la sortie du compresseur 6 est reliée à l'entrée 303 de la gaine de circulation de fluide de chauffage. Ainsi, ce sont les buées extraites des produits à sécher qui, récupérées et recyclées, servent elles-mêmes à chauffer le cylindre 31, se condensent dans la gaine de circulation de fluide, qui sert donc de condenseur de buées, et sont évacuées par la sortie 304 à l'état liquide.

Le sécheur selon l'invention fonctionne approximativement dans les domaines de 0 à 120°C côté produit, 0 à 200°C côté chauffage, avec un écart de température entre les côtés produit et chauffage pouvant varier de 10°C à 100°C environ. De manière typique, pour une différence de température de 40°C entre la température d'entrée des produits à dessécher et la température atteinte au moment de leur décollage, il est nécessaire de prévoir une énergie de 120 kWh par tonne d'eau à faire évaporer dans le cas d'une recompression mécanique de vapeur.

Bien entendu, l'invention n'est pas limitée aux formes de réalisation ci-dessus décrites et représentées, et on pourra prévoir d'autres formes de réalisation sans pour autant sortir du cadre de l'invention. On pourra ainsi par exemple prévoir que la gaine entre enveloppe et cylindre serve non pas au passage d'un fluide entrant à une température relativement élevée, mais au logement d'une ou plusieurs résistance(s) électrique(s) de chauffage disposée(s) repliée(s) ou hélicoïdalement.

12                                    **0122858**

<u>REVENDICATIONS</u>

1. Sécheur de produits liquides ou pâteux du genre comportant une enveloppe extérieure, un cylindre intérieur à cette enveloppe, et un espace entre l'enveloppe et le cylindre pour constituer une gaine de chauffage, sécheur caractérisé en ce que le cylindre intérieur (31) est monté actionnable en rotation par rapport à l'enveloppe (30) autour d'un axe longitudinal, et en ce qu'il comporte des moyens d'introduction dans le cylindre des produits à sécher et d'épandage(35) de ces produits sur la paroi interne dudit cylindre pour en encoller celle-ci, des moyens de séparation (38,38') des produits secs de ladite paroi interne, des moyens d'évacuation (37) des produits secs de l'intérieur du cylindre (31), et une sortie pour les buées produites par le séchage des produits.

2. Sécheur selon la revendication 1, caractérisé en ce que la gaine de chauffage (32) est destinée à la circulation d'un fluide de chauffage et comporte à cet effet une entrée de fluide (303) à sa partie supérieure et une sortie (304) à sa partie inférieure.

3. Sécheur selon au moins l'une quelconque des revendications 1 et 2, caractérisé en ce que la gaine (32) contient des moyens de chauffage électrique.

4. Sécheur selon au moins l'une quelconque des revendications 1 à 3, caractérisé en ce que les moyens d'épandage des produits à sécher sur la paroi interne du cylindre pour en encoller celle-ci comportent un organe de pulvérisation des produits.

5. Sécheur selon au moins l'une quelconque des revendications 1 à 4, caractérisé en ce que les moyens d'épandage des produits à sécher sur la paroi interne du cylindre pour en encoller celle-ci comportent des orifices percés dans une canalisation d'alimentation (35) servant à introduire lesdits produits dans le cylindre (31).

6. Sécheur selon l'une quelconque des revendications 1 à 5, caractérisé en ce que les moyens d'épandage des produits à sécher comportent un rouleau applicateur (35').

7. Sécheur selon l'une quelconque des revendications 1 à 6, caractérisé en ce que les moyens de séparation des produits secs de la paroi interne comportent au moins une lame (38) disposée sensiblement parallèlement à l'axe longitudinal du cylindre (31).

8. Sécheur selon l'une quelconque des revendications 1 à 7, caractérisé en ce que les moyens de séparation des produits secs de la paroi interne comportent au moins une brosse cylindrique (38') dont l'axe longitudinal est disposé sensiblement parallèlement à celui du cylindre (31).

9. Sécheur selon l'une quelconque des revendications 1 à 8, caractérisé en ce que les moyens d'évacuation des produits secs de l'intérieur du cylindre comportent une vis sans fin (37) fonctionnant en vis d'Archimède.

10. Sécheur selon l'une quelconque des revendications 1 à 9, caractérisé en ce que l'entrée des produits à sécher, la sortie des produits secs, et la sortie des buées sont effectuées parallèlement à l'axe longitudinal du cylindre (31).

11. Sécheur selon l'une quelconque des revendications 1 à 10, caractérisé en ce que la sortie des buées est effectuée dans la même région du cylindre (31) que l'entrée des produits à sécher et la sortie des produits secs, dans un demi-arbre creux (312a).

12. Sécheur selon l'une quelconque des revendications 1 à 10, caractérisé en ce que la sortie des buées, l'entrée des produits à sécher et la sortie des produits secs sont effectuées, pour l'une de ces opérations, d'un côté du cylindre, et pour les deux autres, de l'autre côté, dans deux demi-arbres creux (312a, 312b) respectifs.

13. Sécheur selon l'une quelconque des revendications 1 à 12, caractérisé en ce qu'il comporte un déflecteur (39) pour les produits secs à l'intérieur du cylindre tournant(31).

14. Installation de séchage, caractérisée en ce qu'elle comporte un sécheur selon au moins l'une quelconque des revendications 1 à 13, et un circuit (5,52,6) de récupération ainsi que de compression des buées issues du séchage des produits à dessécher, en vue de les introduire dans la gaine de chauffage (32).

15. Installation de séchage selon la revendication 14, caractérisée en ce qu'elle comporte un cyclone (5) de séparation des produits secs et des buées, dont la sortie (52) pour les buées est reliée à l'entrée d'un compresseur dont la sortie est elle-même reliée à l'entrée (303) de la gaine de chauffage (32).

0122858

1/1.

FIG.1

FIG.2

FIG.3

FIG.4

FIG.5

Office européen
des brevets

# RAPPORT DE RECHERCHE EUROPEENNE

EP    84  40  0734

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl. 3) |
|---|---|---|---|
| X | DE-A-3 100 513   (DYNAMIT NOBEL)<br><br>* En entier * | 1,5-7,<br>9,10,<br>12,13 | F 26 B    3/20<br>F 26 B   25/04<br>B 01 D    1/22<br>B 01 J    2/24 |
| A | CH-A- 236 754   (SCHÖNBERGER)<br><br>* En entier * | 1,2,10<br>,11,14 | |
| A | CH-A- 241 756   (BROWN, BOVERI)<br><br>* En entier * | 1,2,10<br>,12,14 | |
| A | DE-A-1 495 665   (HOECHST)<br>* En entier * | 1-3 | |
| A | GB-A-1 403 352   (RANDELL)<br><br>* Page 2, ligne 16 - page 3, ligne 74 * | 1,3,4,<br>10,12 | DOMAINES TECHNIQUES RECHERCHES (Int. Cl. 3)<br><br>F 26 B<br>B 01 D<br>B 01 J |
| A | FR-A-2 466 262   (ZAPOROZHSKY TITANO-MAGNIEVY KOMBINAT)<br>* Page 7, ligne 15 - page 8, ligne 25 * | 8 | |
| A | GB-A- 909 889   (HOLLAND-MERTEN)<br><br>* En entier * | 10,11,<br>15 | |

Le présent rapport de recherche a été établi pour toutes les revendications

| Lieu de la recherche<br>LA HAYE | Date d'achèvement de la recherche<br>11-07-1984 | Examinateur<br>DE RIJCK F. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                

& : membre de la même famille, document correspondant

OEB Form 1503. 03.82